(19) **Europäisches Patentamt / European Patent Office / Office européen des brevets**

(11) **EP 3 301 839 B1**

(12) **EUROPEAN PATENT SPECIFICATION**

(45) Date of publication and mention
of the grant of the patent:
**04.09.2019  Bulletin 2019/36**

(51) Int Cl.:
***H04L 1/00*** *(2006.01)*

(21) Application number: **16191749.7**

(22) Date of filing: **30.09.2016**

(54) **METHOD AND DEVICE FOR PROVIDING CQI REPORTS**

VERFAHREN UND VORRICHTUNGEN ZUR BEREITSTELLUNG VON CQI-BERICHTEN

PROCEDE ET DISPOSITIF DE FOURNITURE DE RAPPORTS CQI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.04.2018  Bulletin 2018/14**

(73) Proprietor: **Intel IP Corporation
Santa Clara, CA 95054 (US)**

(72) Inventors:
• **GUTIERREZ, Ismael
San Jose, CA California 95134 (US)**
• **FRANZ, Stefan
81379 Muenchen (DE)**

• **FABER, Christian
81547 Muenchen (DE)**
• **CLAUSEN, Axel
85579 Neubiberg (DE)**

(74) Representative: **Lambsdorff & Lange
Patentanwälte
Partnerschaft mbB
Grillparzerstraße 12A
81675 München (DE)**

(56) References cited:
**US-A1- 2004 093 178     US-A1- 2006 093 024
US-A1- 2012 163 208**

**Description**

**FIELD**

The disclosure relates to a method and a device for providing channel quality indicator (CQI) reports which are calculated by a mobile device and transmitted to the eNB in a mobile communication system. In particular the disclosure relates to provision of smoothed CQI reports in fluctuating interference scenarios.

**BACKGROUND**

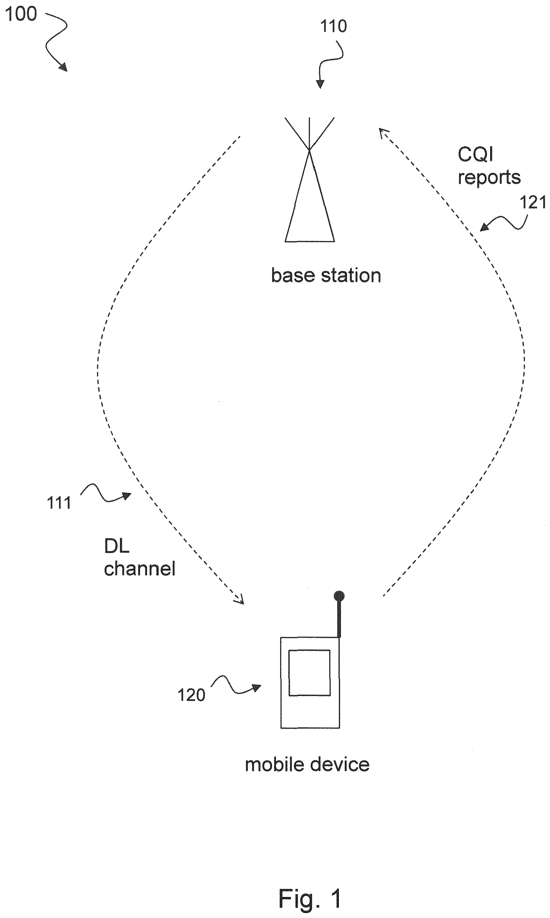

To optimize throughput in a mobile communication system 100, e.g. as shown in Fig. 1, CQI reports 121 calculated at the UE (User Equipment or mobile device) 120 and transmitted to the eNB (base station) 110, should consider the channel as well as the noise and interference generated by other cells in the resulting CSI report. In case of static noise/interference conditions where the noise and/or interference statistics do not vary with time, the UE 120 may compute CSI reports 121 based on measurements in a given measurement subframe. The eNB 110 can convert the received CQI value 121 into an appropriate modulation and coding (MCS) scheme and apply this scheme on the downlink 111. If the UE 120 is calibrated reasonably well, the receiving chain of the UE should then be able to decode the transmitted data with a certain target block error rate (BLER) usually between 5% and 15%.

In case the noise and/or interference is varying with time, the situation becomes more complicated because the CSI report which is based on measurements of the DL channel quality in subframe n may have nothing to do with the noise and/or interference when the eNB applies the received CSI report in the DL to the UE in subframe (n+8). The variation of the interference seen by a UE depends on the load and the scheduling algorithm of the interfering cells. Thus, it may happen that the UE experiences dynamically varying interference conditions from subframe to subframe leading to fluctuating CSI reports being sent to the eNB. If the eNB does not apply any kind of filtering and/or other mechanisms that allow mapping downlink subframes to different interference levels, the received reports are directly mapped to the DL channel. Depending on the interference conditions and the scheduled MCS, the UE may or may not be able to decode the received data on the PDSCH channel resulting in a suboptimal throughput performance. This situation is aggravated by the fact that the difference in signal to interference ratio from subframe to subframe can differ more than 20dB (e.g. from subframes with traffic in neighbor cell to empty subframes), the UE not being able to decode the PDSCH even after several retransmissions and finally leading to radio link failure at radio link control (RLC) layer.

Document US 2006 / 0 093 024 A1 describes a method and an apparatus for adaptively biasing channel quality indicators to maintain a desired block error rate. Document US 2012 / 0 163 208 A1 describes subband signal-to-noise ratio correction in a frequency selective scheduler. Document US 2004 / 0 093 178 A1 describes a method and an apparatus for determining signal-to-interference ratio with reduced bias effect.

There is a need to provide a concept for improving CSI reporting, in particular with respect to the above described scenarios of dynamically varying interference conditions.

**BRIEF DESCRIPTION OF THE DRAWINGS**

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description.

Fig. 1 is a schematic diagram illustrating a wireless communication system 100.

Fig. 2 is a block diagram illustrating a method 200 for providing CQI reports according to the disclosure.

Fig. 3 is a block diagram illustrating a CQI processor 300 according to the disclosure.

Fig. 4 is a schematic diagram illustrating a system 400 for processing CSI/CQI reports 404 according to the disclosure.

Fig. 5 is a block diagram illustrating a CQI processor 500 according to the disclosure.

Fig. 6 is a block diagram illustrating a CQI processor 600 according to the disclosure.

Fig. 7 is a schematic diagram illustrating an exemplary noise filtering operation 700 according to the disclosure.

Fig. 8 is a performance diagram illustrating throughput versus RSRP of a noise smoothing operation according to the disclosure.

## DETAILED DESCRIPTION

In the following detailed description, reference is made to the accompanying drawings, which form a part thereof, and in which is shown by way of illustration specific aspects in which the invention may be practiced. It is understood that other aspects may be utilized and structural or logical changes may be made without departing from the scope of the present invention. The following detailed description, therefore, is not to be taken in a limiting sense, and the scope of the present invention is defined by the appended claims.

The following terms, abbreviations and notations will be used herein:

RF: Radio Frequency
LTE: Long Term Evolution
UE: User Equipment, mobile device, mobile terminal
OFDM: Orthogonal Frequency Division Multiplex eNB,
eNodeB: Base station, radio cell
MIMO: Multiple Input Multiple Output
CSI: Channel State Information
CQI: Channel Quality Indicator
RI: Rank Indicator
SINR: Signal to Interference and Noise Ratio
FCM: Feedback Channel Memory
FNM: Feedback Noise Memory
WB: Wideband
SB: Subband
MI: Mutual Information
RSRP: reference signal received power

The methods and devices described herein may be used for CQI (channel quality indicator) computation and CSI (channel state information) reporting. It is understood that comments made in connection with a described method may also hold true for a corresponding device configured to perform the method and vice versa. For example, if a specific method step is described, a corresponding device may include a unit to perform the described method step, even if such a unit is not explicitly described or illustrated in the figures. Further, it is understood that the features of the various exemplary aspects described herein may be combined with each other, unless specifically noted otherwise.

The methods and devices described herein may be implemented in wireless communication networks, in particular communication networks based on mobile communication standards such as LTE, in particular LTE-A and/or OFDM and successor standards such as 5G. The methods and devices described below may be implemented in electronic devices such as mobile devices (or mobile stations or User Equipments (UE)), in particular in radio receivers of such mobile devices. The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The methods and devices described herein may be configured to transmit and/or receive radio signals and performing associated signal processing. Radio signals may be or may include radio frequency signals radiated by a radio transmitting device (or radio transmitter or sender) with a radio frequency lying in a range of about 3 kHz to 300 GHz. The frequency range may correspond to frequencies of alternating current electrical signals used to produce and detect radio waves.

The methods and devices described herein after may be designed in accordance to mobile communication standards such as e.g. the Long Term Evolution (LTE) standard or the advanced version LTE-A thereof. LTE (Long Term Evolution), marketed as 4G LTE and future 5G LTE, is a standard for wireless communication of high-speed data for mobile phones and data terminals.

The methods and devices described hereinafter may be applied in OFDM systems. OFDM is a scheme for encoding digital data on multiple carrier frequencies. A large number of closely spaced orthogonal sub-carrier signals may be used to carry data. Due to the orthogonality of the sub-carriers crosstalk between sub-carriers may be suppressed.

The methods and devices described hereinafter may be applied in MIMO systems and diversity receivers. Multiple-input multiple-output (MIMO) wireless communication systems employ multiple antennas at the transmitter and/or at the receiver to increase system capacity and to achieve better quality of service. In spatial multiplexing mode, MIMO systems may reach higher peak data rates without increasing the bandwidth of the system by transmitting multiple data streams in parallel in the same frequency band. A diversity receiver uses two or more antennas to improve the quality and reliability of a wireless link.

In the following, techniques based on channel state information (CSI), channel quality indication (CQI) and rank indication (RI) are described. CSI stands for Channel State Information that is in general a measure for the state of the communication channel. CSI is a collective name of several different types of indicators (UE report) such as Channel Quality Indicator (CQI), precoding matrix indicator (PMI), precoding type indicator (PTI) and rank indication (RI). CQI stands for Channel Quality Indicator. As the name implies, it is an indicator carrying the information on how good/bad the communication channel quality is. The rank indication (RI) in LTE is one of the control information that a UE will report to eNodeB based on uplink scheduling. The contents of RI is just a couple of bits. The number depends on antenna configuration. If the eNodeB is configured with 2 transmit antennas on downlink then the number of bits reported in RI will be one and if its 4 then number of RI bits will be 2. In the two antenna case RI is indicated using one bit, so a bit 0 indicates RANK1 and a bit 1 indicates RANK2. RANK1 means the UE is seeing a good SINR only on one of its receive antenna so asking the eNodeB to bring down the transmission mode to single antenna or transmit diversity. A RANK2 from the UE means good SINR on both the antenna ports and eNodeB can schedule MIMO.

In the following, embodiments are described with reference to the drawings, wherein like reference numerals are generally utilized to refer to like elements throughout. In the following description, for purposes of explanation, numerous specific details are set forth in order to provide a thorough understanding of one or more aspects of embodiments. However, it may be evident to a person skilled in the art that one or more aspects of the embodiments may be practiced with a lesser degree of these specific details. The following description is therefore not to be taken in a limiting sense.

The various aspects summarized may be embodied in various forms. The following description shows by way of illustration various combinations and configurations in which the aspects may be practiced. It is understood that the described aspects and/or embodiments are merely examples, and that other aspects and/or embodiments may be utilized and structural and functional modifications may be made without departing from the scope of the present disclosure.

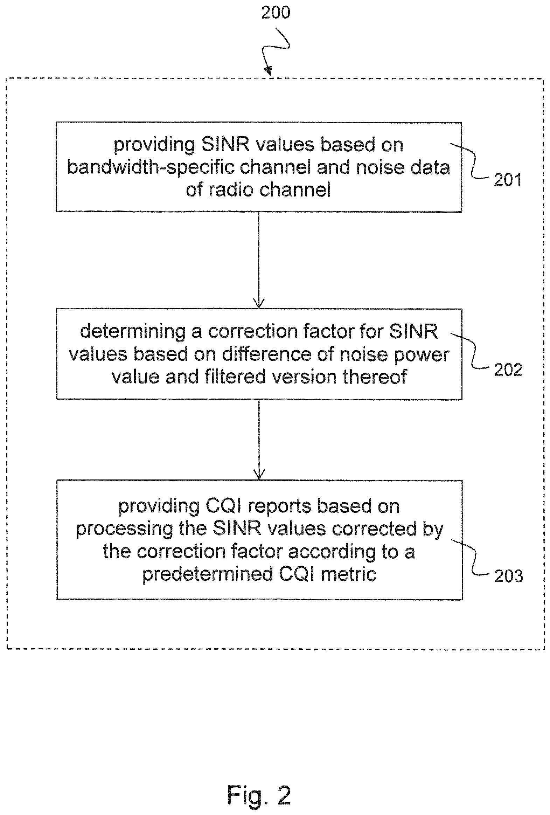

Fig. 2 is a block diagram illustrating a method 200 for providing CQI reports according to the disclosure.

The method 200 includes providing 201 signal to interference and noise ratio (SINR) values based on bandwidth-specific channel and noise data of a radio channel. The method 200 further includes determining 202 a correction factor for the SINR values based on a difference of a noise power value and a time-filtered version of the noise power value. The method 200 further includes providing 203 the CQI reports based on processing the SINR values corrected by the correction factor according to a predetermined CQI metric.

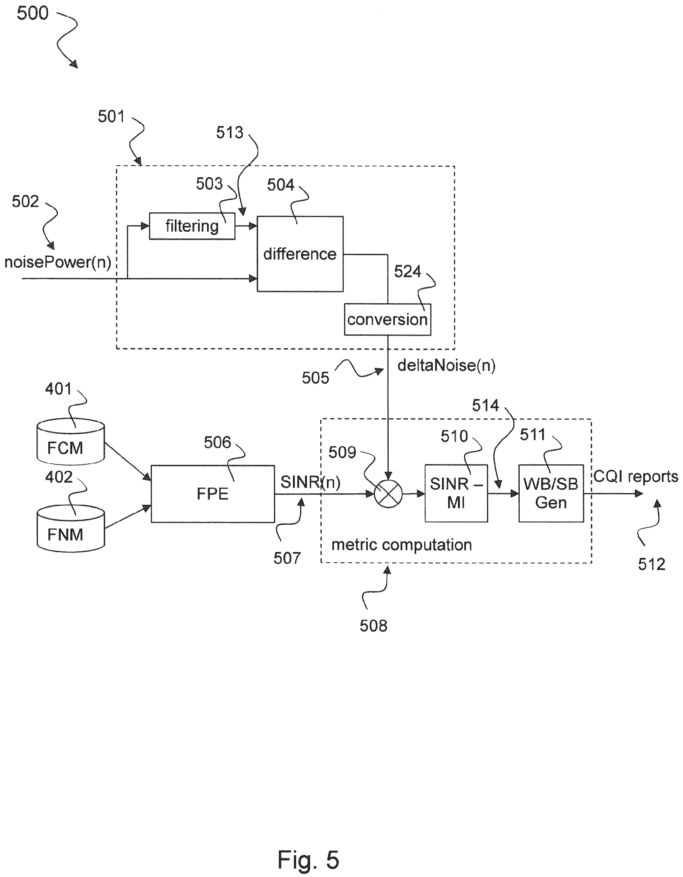

The noise power value may indicate a wideband noise and interference of the radio channel. The method 200 may further include time-filtering the noise power value per sub-frame to obtain the time-filtered version of the noise power value, e.g. as described below with respect to Fig. 5. The method 200 may further include computing the difference of the noise power value and the time-filtered version of the noise power value only per multiple sub-frames, e.g. as described below with respect to Fig. 5. The method 200 may further include determining the correction factor and providing the CQI reports only per multiple sub-frames.

The multiple sub-frames may correspond to a measurement sub-frame set scheduled by a network designated to receive the CQI reports. The SINR values may be only corrected by the correction factor if the difference of the noise power value and the time-filtered version of the noise power value is equal to or greater than a first noise power threshold. The SINR values may be only corrected by the correction factor if the difference of the noise power value and the time-filtered version of the noise power value is equal to or less than a second noise power threshold.

The correction factor may be applied as a multiplicative factor to the SINR values, e.g. as described below with respect to Fig. 5 or alternatively as an additive factor. The method 200 may further include applying frequency-dependent post-equalization to the bandwidth-specific channel and noise data to provide the SINR values. The method 200 may further include converting the SINR values corrected by the correction factor into frequency dependent mutual information metrics.

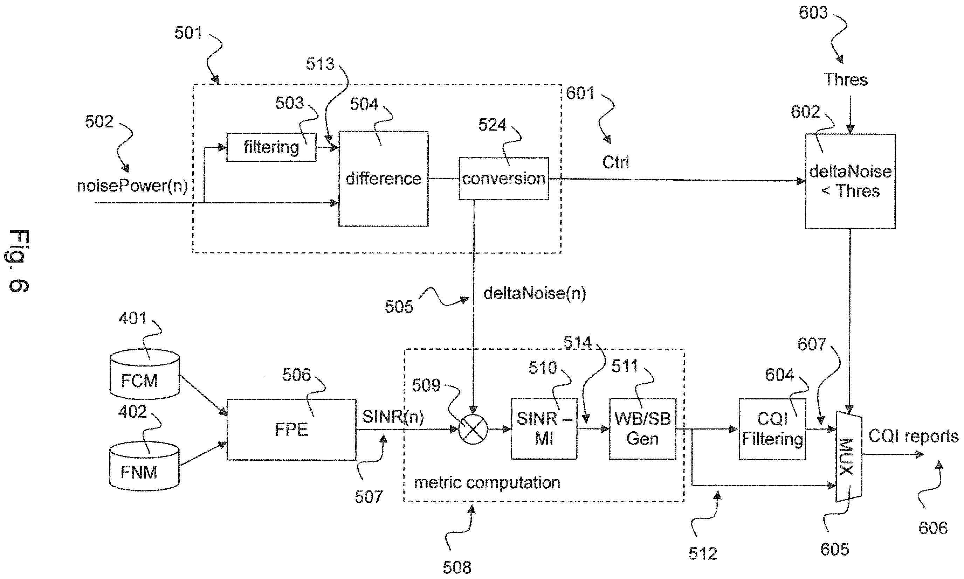

The method 200 may further include wideband and/or sub-band averaging the frequency dependent mutual information metrics, e.g. as described below with respect to Figs. 5 and 6. The method 200 may further include providing a time-filtered version of the wideband and/or sub-band averaged mutual information metrics, e.g. as described below with respect to Figs. 5 and 6.

The method 200 may further include selecting one of the wideband and/or sub-band averaged mutual information metrics and their time-filtered versions to be provided as CQI reports, e.g. as described below with respect to Fig. 6. The selection may be based on a comparison of the difference of the noise power value and the time-filtered version of the noise power value with a third threshold, e.g. as described below with respect to Fig. 6. The method 200 may further include selecting one of a first filtering function and a second filtering function to compute the time-filtered version of the noise power value based on a measurement sub-frame set scheduled by a network designated to receive the CQI reports.

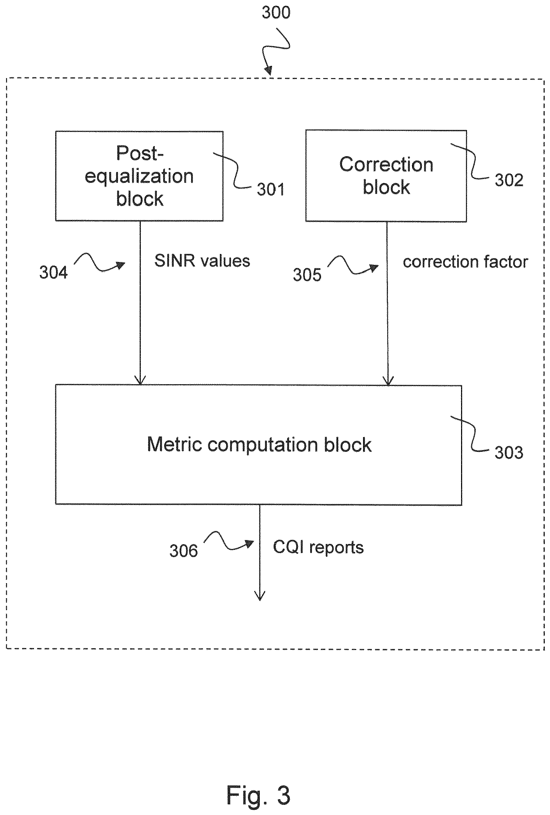

Fig. 3 is a block diagram illustrating a CQI (channel quality indicator) processor 300 according to the disclosure.

The CQI processor 300 includes a post-equalization block 301, a correction block 302 and a metric computation block 303.

The post-equalization block 301 is configured to provide signal to interference and noise ratio (SINR) values 304 based on bandwidth-specific channel and noise data of a radio channel. The correction block 302 is configured to determine a correction factor 305 for the SINR values 304 based on a difference of a noise power value and a time-filtered version of the noise power value, e.g. as described below with respect to Fig. 5. The metric computation block 303 is configured to provide CQI reports 306 based on processing the SINR values 304 corrected by the correction factor 305 according to a predetermined CQI metric.

The CQI processor 300 may further include a multiplier, e.g. as described below with respect to Fig. 5, configured to multiply the SINR values 304 with the correction factor 305 to provide the SINR values 304 corrected by the correction factor 305.

The metric computation block 303 may include a conversion block, configured to convert the SINR values 304 corrected by the correction factor 305 into frequency dependent mutual information metrics and an averaging block, configured to wideband and/or sub-band average the frequency dependent mutual information metrics, e.g. as described below with respect to Fig. 5.

The metric computation block 303 may further include a selection block, configured to select one of the wideband and/or sub-band averaged mutual information metrics and their time-filtered versions to be provided as CQI reports 306, e.g. as described below with respect to Fig. 6. The selection may be based on a comparison of the difference of the noise power value and the time-filtered version of the noise power value with a third threshold, e.g. as described below with respect to Fig. 6.

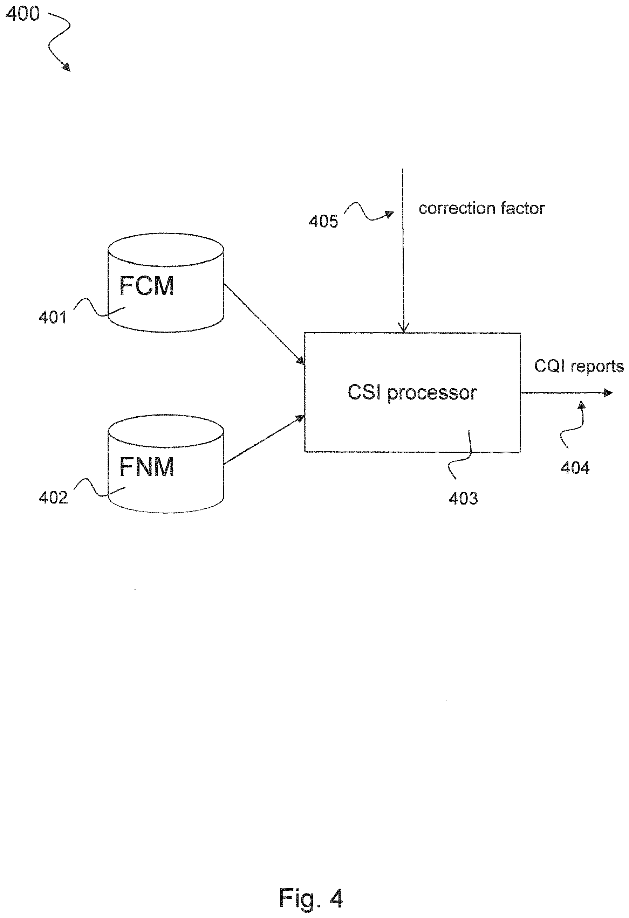

Fig. 4 is a schematic diagram illustrating a system 400 for processing CSI/CQI reports 404. The system 400 includes a CSI (channel state information) processor 403 for computing a CSI metric, e.g. a CQI metric and providing CSI and/or CQI reports 404 by accessing a feedback channel memory (FCM) 401 and a feedback noise memory (FNM) storing bandwidth specific channel as well as noise/interference estimates, respectively and applying a correction factor 405 to the processing as described above with respect to Figures 2 and 3.

The CSI processor 403 then takes the bandwidth specific channel and the noise input and computes wideband and/or subband CSI/CQI metrics which are used to generate CSI/CQI reports 404. As CSI/CQI reports 404 are usually not scheduled every subframe the content of the FCM/FNM memories 401, 402 are typically only updated and read once a CSI/CQI report 404 has to be generated. By using the correction factor that considers the wideband noise as described above with respect to Figs. 2 and 3 and as further detailed below with respect to Fig. 5, the CSI processor 403 can avoid to regenerate a filtered version (FIR or IIR) of the frequency dependent noise metrics every subframe and hence save power particularly in case of sparse CSI/CQI reports 404. On the other hand by using the correction factor which is based on the wideband noise, computation of the CSI/CQI metrics considers the average noise level component thereby improving performance. For example, if the interference only occurs in certain subframes, this scenario is captured by the correction factor.

Fig. 5 is a block diagram illustrating a CQI processor 500 according to the disclosure. The CQI processor 500 represents a specific implementation of the CQI processor 300 described above with respect to Fig. 3. The CQI processor 500 includes a feedback post-equalization (FPE) block 506 according to the block 301 in Fig. 3, a correction block 501 according to the block 302 in Fig. 3 and a metric computation block 508 according to the block 303 in Fig. 3.

The feedback post-equalization block 506 is configured to provide signal to interference and noise ratio (SINR) values 507 based on bandwidth-specific channel and noise data of a radio channel. This bandwidth-specific channel and noise data may be stored in a FCM memory 401 and an FNM memory 402, respectively, e.g. as described above with respect to Fig. 4. The correction block 501 is configured to determine a correction factor 505 "deltaNoise(n)" for the SINR values 304 "SINR(n)" based on a difference of a noise power value 502 "noisePower(n)" and a time-filtered version of the noise power value 502. The metric computation block 508 is configured to provide CQI reports 512 based on processing the SINR values 507 corrected by the correction factor 505 according to a predetermined CQI metric.

The algorithm processed by the CQI processor 500 takes as an input one wideband noise power value 502 per subframe (which is a typical by-product of a state-of-the-art receiver). The correction block 501 of the CQI processor 500 filters this input 502, e.g. by using FIR or IIR filtering 503 to compute an average noise power value 513. The effective length of the filter 503 determines how fast the UE is able to follow changes in the interference versus how stable the CQI shall be. In case a CSI/CQI report has to be computed in subframe n (subframe n is the measurement subframe) the difference 504 between the averaged wideband 513 and the instantaneous noise power 502 is computed and after conversion 524 to a required format (e.g. by scaling or performing any of the conversion operations described below) applied as a correction factor "deltaNoise(n)" 505 to the frequency dependent post-equalization SINR values 507 (computed in the FPE block 506) as a multiplicative factor before the SINR-MI block 510 in the metric computation block 508 converts the frequency dependent SINR values 507 into frequency dependent mutual information metrics 514 followed by wideband or subband averaging in the WB/SB Gen block 511. A multiplier 509 is used to multiply SINR(n) with the correction factor 505.

The same SNR correction may also be applied when computing the rank indicator (not depicted in Fig. 5), leading to a reported rank which is more stable and robust against fast changes in the noise plus interference level.

Additionally, the same SNR correction metric can be used to detect spikes in the noise plus interference which can then be also used to enable additional CQI filtering (described below with respect to Fig. 6) which can make use of previously reported metrics (RI/CQI). This second step filtering further reduces the fluctuations in RI/CQI.

The functional flow is depicted in Fig. 5. Note that only the filtering operation of a single noise power value 502 takes place each subframe. The difference 504 computation as well as the update of the FCM/FNM memories 401, 402 may happen only when a CSI/CQI report 512 has to be generated and during subframes that contain valid CSI reference resources.

The Difference block 504 in Fig. 5 compares the filtered noise power 513 and the instantaneous noise power 502. To obtain optimal performance the raw difference value may be manipulated before converting it into the deltaNoise-value 505 (by the conversion block 524) which has a suitable format for the multiplier 509 shown in the Metric Computation block 508. There are different implementations for such manipulation as described in the following:

a) The raw difference value may be converted into a suitable format directly

$$deltaNoise(n) = format\left(\overline{P}_n - P_n\right)$$

b) Only raw difference values that lead to a lower, i.e. more conservative, CSI report may be forwarded to multiplier

$$deltaNoise(n) = format\left(\begin{cases} \overline{P}_n - P_n, & P_n \geq \overline{P}_n \\ 0, & otherwise \end{cases}\right)$$

c) Only large difference values that lead to significant corrections in either direction, i.e. more aggressive or more conservative, CSI reports may be considered. If the difference is too small no correction is applied.

$$deltaNoise(n) = format\left(\begin{cases} \overline{P}_n - P_n, & \left|\overline{P}_n - P_n\right| \geq Thres1 \\ 0, & otherwise \end{cases}\right)$$

d) Only difference values with a magnitude lower than a certain threshold may be considered in the deltaNoise value

$$deltaNoise(n) = format\left(\begin{cases} \overline{P}_n - P_n, & \left|\overline{P}_n - P_n\right| < Thres2 \\ 0, & otherwise \end{cases}\right)$$

Combinations of the methods above, i.e. a) to d), are possible.

Fig. 6 is a block diagram illustrating a CQI processor 600 according to the disclosure.

The CQI processor 600 represents a specific implementation of the CQI processor 500 described above with respect to Fig. 5. The CQI processor 600 includes the feedback post-equalization (FPE) block 506, the correction block 501 and the metric computation block 508. Additionally CQI filtering 604 is implemented to further reduce the fluctuations in CSI/CQI. The CQI 512 computed by the metric computation block 508 is CQI filtered 604 to provide a time-filtered CQI 607. Either the CQI 512 or the filtered CQI 607 is used to generate the CQI reports 606. A multiplexer 605 which is controlled by a threshold comparator 602 multiplexes between switching the CQI 512 or the filtered CQI 607 to the CQI reports 606. The threshold comparator 602 receives the same correction factor "deltaNoise" 505 that corrects the processing of the metric computation block 508 as control input 601. If "deltaNoise" 505 is smaller than a threshold value "Thres" 603 the multiplexer 605 switches the CQI 512 to be used as CQI reports 606, otherwise the multiplexer 605 switches the filtered CQI 607 to be used as CQI reports 606.

In this disclosure power efficient noise filtering methods and devices are described. The techniques compute a correction factor based on wideband noise power estimates and avoid frequent updates of the CSI input metrics (e.g. PRB - physical resource block - specific channel estimates or PRB specific whitening filters). The correction factor is based on a comparison between a time filtered version of the noise/interference power and the instantaneous noise/interference power and it is applied as a SNR correction factor during the CQI computation process. The result is a smoothened CQI report representing the average channel quality. Note that the disclosed techniques do not apply filtering to the reported CQI itself as this would lead to rather big gaps in the observation window in subframes where no CSI reports have to be computed. Instead, the noise/interference statistics of all subframes (independently whether a subframe is used to compute a CSI report or not) are considered in the filtering operation and are thus reflected in the correction factor applied in the CSI processor.

A straight forward implementation of a noise smoothing would be to apply a filter (IIR or FIR) to all input metrics of the CSI processor. Typically the input metrics of the CSI processor are bandwidth dependent and in some systems such as LTE PRB dependent. This means that a large amount of data has to be processed in every subframe even though only some subframes are used as measurement subframes for CSI reports. The amount of subframes used for CSI reporting depends on the periodicity of periodic CSI reports and the frequency of aperiodic reports requested by the network.

The disclosed solution allows carrying out a noise filtering operation without having to regenerate any bandwidth specific metrics which are used by the CSI processor to generate a CQI value. Instead it averages wideband noise power values, i.e. one value per subframe, and derives a wideband correction factor based on a comparison of the averaged value and the instantaneous value only when CSI report has to be computed. This correction factor is then applied during the CQI computation in such a way that certain frequency dependent intermediate values are corrected before they get collapsed into a single wideband or several subband specific CQI values. The disclosed way has much lower complexity as filtering is only applied to wideband values, i.e. one value per subframe, leading to a very power efficient implementation.

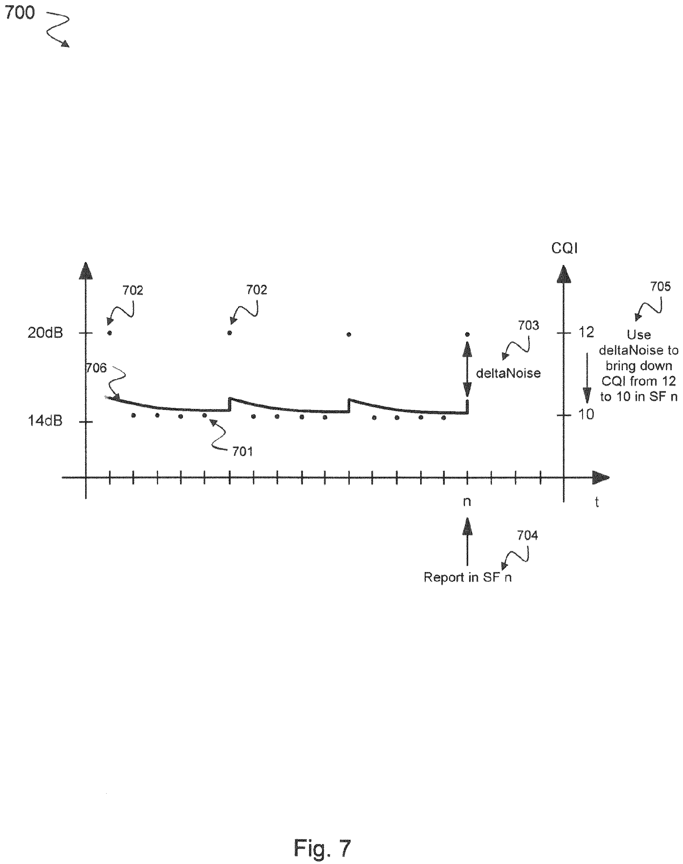

Fig. 7 is a schematic diagram illustrating an exemplary noise filtering operation 700 according to the disclosure. Fig. 7 shows an example where 8 out of 10 subframes 701 experience a SNR level of 14dB while the remaining 2 subframes 702 have 20dB SNR. Thus, the 8 subframes 701 are experiencing higher interference compared to the other 2 subframes 702.

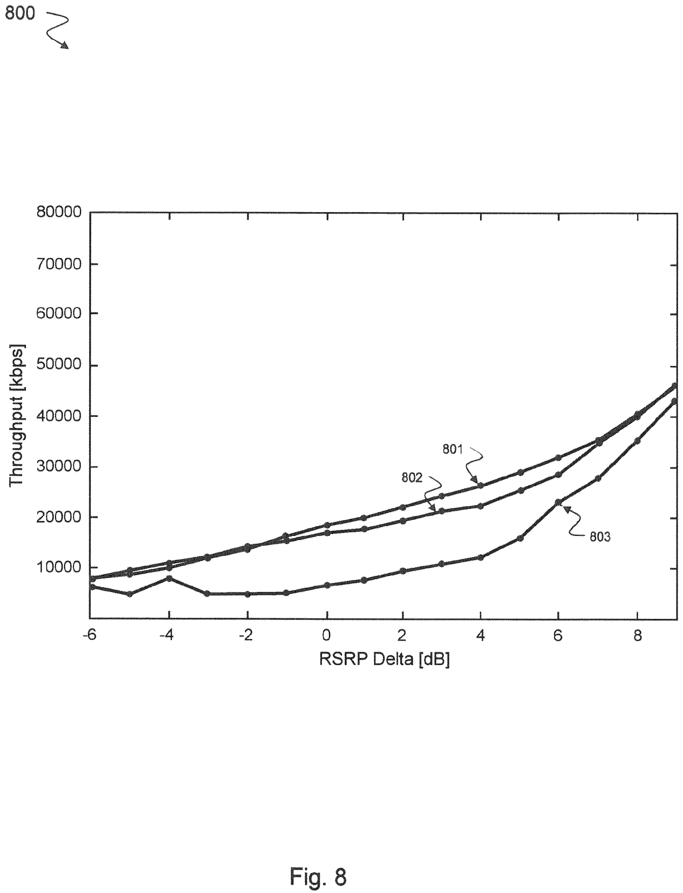

Assume, that the CQI that corresponds to a SNR of 20dB is 12 and the CQI corresponding to a SNR of 14dB is 10. In case a CSI report is based on a subframe experiencing 20dB the reported CQI will be 12. The corresponding MCS arrives in the downlink in subframe (n+8) which may experience a SNR of 14dB leading to a decoding failure (NACK) with very high probability thereby reducing throughput. To prevent this NACK, the disclosed algorithm averages 706 the wideband noise powers, computes the diffNoise metric 703 (which would be on the order of 5dB according to Fig. 7) and reduces the CQI 705 from 12 to 10, thereby enabling the receiver to successfully decode the DL in subframe (n+8). The impact of this in throughput is shown in Figure 8.

Fig. 8 is a performance diagram illustrating throughput versus RSRP of a noise smoothing operation according to the disclosure.

In Fig. 8 the performance of different variants 801, 802 of the disclosed algorithm is compared to standard CSI reporting 803 in case of colliding cells and where the neighbor cell is loaded about 90% of the time. As shown, the improvement is higher than 100% for some of the RSRP (reference signal received power) deltas (RSRP delta = RSRP serving - RSRP neighbor).

In one implementation, the usage of this algorithm may be limited to scenarios with presence of strong interference. The activation of this algorithm can be controlled by measuring the strength of the dominant interfering cell and comparing it to an activation threshold.

In case that the network schedules measurement restricted subframe sets, then an implementation alternative may implement two different filtering functions which get updated according to the currently scheduled subframe set and the CSI metric computation block can select one or the other filter value to determine the difference to the currently measured noise estimate.

The devices and systems described in this disclosure may be implemented as Digital Signal Processors (DSP), microcontrollers or any other side-processor or hardware circuit on a chip or an application specific integrated circuit (ASIC).

Embodiments described in this disclosure can be implemented in digital electronic circuitry, or in computer hardware, firmware, software, or in combinations thereof, e.g. in available hardware of mobile devices or in new hardware dedicated for processing the methods described herein.

The present disclosure also supports a computer program product including computer executable code or computer executable instructions that, when executed, causes at least one computer to execute the performing and computing blocks described herein, in particular the method 200 described above with respect to Fig. 2. Such a computer program product may include a readable storage medium storing program code thereon for use by a processor, the program code comprising instructions for performing the method 200 as described above.

**EXAMPLES**

The following examples pertain to further embodiments.

Example 1 is a method for providing channel quality indicator (CQI) reports, the method comprising: providing signal to interference and noise ratio (SINR) values based on bandwidth-specific channel and noise data of a radio channel; determining a correction factor for the SINR values based on a difference of a noise power value and a time-filtered version of the noise power value; and providing the CQI reports based on processing the SINR values corrected by the correction factor according to a predetermined CQI metric.

In Example 2, the subject matter of Example 1 can optionally include that the noise power value indicates a wideband noise and interference of the radio channel.

In Example 3, the subject matter of any one of Examples 1-2 can optionally include: time-filtering the noise power value per sub-frame to obtain the time-filtered version of the noise power value.

In Example 4, the subject matter of any one of Examples 1-3 can optionally include: computing the difference of the noise power value and the time-filtered version of the noise power value only per multiple sub-frames.

In Example 5, the subject matter of any one of Examples 1-4 can optionally include: determining the correction factor and providing the CQI reports only per multiple sub-frames.

In Example 6, the subject matter of any one of Examples 4-5 can optionally include that the multiple sub-frames correspond to a measurement sub-frame set scheduled by a network designated to receive the CQI reports.

In Example 7, the subject matter of any one of Examples 1-6 can optionally include that the SINR values are only corrected by the correction factor if the difference of the noise power value and the time-filtered version of the noise power value is equal to or greater than a first noise power threshold.

In Example 8, the subject matter of any one of Examples 1-7 can optionally include that the SINR values are only corrected by the correction factor if the difference of the noise power value and the time-filtered version of the noise power value is equal to or less than a second noise power threshold.

In Example 9, the subject matter of any one of Examples 1-8 can optionally include that the correction factor is applied as a multiplicative factor to the SINR values.

In Example 10, the subject matter of any one of Examples 1-9 can optionally include: applying frequency-dependent post-equalization to the bandwidth-specific channel and noise data to provide the SINR values.

In Example 11, the subject matter of any one of Examples 1-10 can optionally include: converting the SINR values corrected by the correction factor into frequency dependent mutual information metrics.

In Example 12, the subject matter of Example 11 can optionally include: wideband and/or sub-band averaging the frequency dependent mutual information metrics.

In Example 13, the subject matter of Example 12 can optionally include: providing a time-filtered version of the wideband and/or sub-band averaged mutual information metrics.

In Example 14, the subject matter of Example 13 can optionally include: selecting one of the wideband and/or sub-band averaged mutual information metrics and their time-filtered versions to be provided as CQI reports.

In Example 15, the subject matter of Example 14 can optionally include that selecting is based on a comparison of the difference of the noise power value and the time-filtered version of the noise power value with a third threshold.

In Example 16, the subject matter of any one of Examples 1-15 can optionally include: selecting one of a first filtering function and a second filtering function to compute the time-filtered version of the noise power value based on a measurement sub-frame set scheduled by a network designated to receive the CQI reports.

Example 17 is a computer readable non-transitory medium on which computer instructions are stored which when executed by a computer causes the computer to perform the method of any one of Examples 1 to 16.

Example 18 is a channel quality indicator (CQI) processor, comprising: a post-equalization block, configured to

8

provide signal to interference and noise ratio (SINR) values based on bandwidth-specific channel and noise data of a radio channel; a correction block, configured to determine a correction factor for the SINR values based on a difference of a noise power value and a time-filtered version of the noise power value; and a metric computation block, configured to provide CQI reports based on processing the SINR values corrected by the correction factor according to a predetermined CQI metric.

In Example 19, the subject matter of Example 18 can optionally include a multiplier, configured to multiply the SINR values with the correction factor to provide the SINR values corrected by the correction factor.

In Example 20, the subject matter of any one of Examples 18-19 can optionally include that the metric computation block comprises: a conversion block, configured to convert the SINR values corrected by the correction factor into frequency dependent mutual information metrics; and an averaging block, configured to wideband and/or sub-band average the frequency dependent mutual information metrics.

In Example 21, the subject matter of Example 20 can optionally include a selection block, configured to select one of the wideband and/or sub-band averaged mutual information metrics and their time-filtered versions to be provided as CQI reports.

In Example 22, the subject matter of Example 21 can optionally include that the selection block is configured to select based on a comparison of the difference of the noise power value and the time-filtered version of the noise power value with a third threshold.

Example 23 is a method for providing rank indicator (RI) reports, the method comprising: providing signal to interference and noise ratio (SINR) values based on bandwidth-specific channel and noise data of a radio channel; determining a correction factor for the SINR values based on a difference of a noise power value and a time-filtered version of the noise power value; and providing the RI reports based on processing the SINR values corrected by the correction factor according to a predetermined RI metric.

In Example 24, the subject matter of Example 23 can optionally include that the noise power value indicates a wideband noise and interference of the radio channel.

In Example 25, the subject matter of any one of Examples 23-24 can optionally include: time-filtering the noise power value per sub-frame to obtain the time-filtered version of the noise power value.

In Example 26, the subject matter of any one of Examples 23-25 can optionally include: computing the difference of the noise power value and the time-filtered version of the noise power value only per multiple sub-frames.

In Example 27, the subject matter of any one of Examples 23-26 can optionally include: determining the correction factor and providing the RI reports only per multiple sub-frames.

In Example 28, the subject matter of any one of Examples 26-27 can optionally include that the multiple sub-frames correspond to a measurement sub-frame set scheduled by a network designated to receive the RI reports.

In Example 29, the subject matter of any one of Examples 23-28 can optionally include that the SINR values are only corrected by the correction factor if the difference of the noise power value and the time-filtered version of the noise power value is equal to or greater than a first noise power threshold.

In Example 30, the subject matter of any one of Examples 23-29 can optionally include that the SINR values are only corrected by the correction factor if the difference of the noise power value and the time-filtered version of the noise power value is equal to or less than a second noise power threshold.

In Example 31, the subject matter of any one of Examples 23-30 can optionally include that the correction factor is applied as a multiplicative factor to the SINR values.

In Example 32, the subject matter of any one of Examples 23-31 can optionally include: applying frequency-dependent post-equalization to the bandwidth-specific channel and noise data to provide the SINR values.

In Example 33, the subject matter of any one of Examples 23-32 can optionally include: converting the SINR values corrected by the correction factor into frequency dependent mutual information metrics.

In Example 34, the subject matter of Example 33 can optionally include: wideband and/or sub-band averaging the frequency dependent mutual information metrics.

In Example 35, the subject matter of Example 34 can optionally include: providing a time-filtered version of the wideband and/or sub-band averaged mutual information metrics.

In Example 36, the subject matter of Example 35 can optionally include: selecting one of the wideband and/or sub-band averaged mutual information metrics and their time-filtered versions to be provided as RI reports.

In Example 37, the subject matter of Example 36 can optionally include that the selecting is based on a comparison of the difference of the noise power value and the time-filtered version of the noise power value with a third threshold.

In Example 38, the subject matter of any one of Examples 23-37 can optionally include: selecting one of a first filtering function and a second filtering function to compute the time-filtered version of the noise power value based on a measurement sub-frame set scheduled by a network designated to receive the RI reports.

Example 39 is a device for providing channel quality indicator (CQI) reports, the device comprising: means for providing signal to interference and noise ratio (SINR) values based on bandwidth-specific channel and noise data of a radio channel; means for determining a correction factor for the SINR values based on a difference of a noise power value and a time-filtered version of the noise power value; and means for providing the CQI reports based on processing the SINR values corrected by the correction factor according to a predetermined CQI metric.

In Example 40, the subject matter of Example 39 can optionally include that the noise power value indicates a wideband noise and interference of the radio channel.

Example 41 is a system-on-chip, comprising: a post-equalization block, configured to provide signal to interference and noise ratio (SINR) values based on bandwidth-specific channel and noise data of a radio channel; a correction block, configured to determine a correction factor for the SINR values based on a difference of a noise power value and a time-filtered version of the noise power value; and a metric computation block, configured to provide CQI reports based on processing the SINR values corrected by the correction factor according to a predetermined CQI metric.

In Example 42, the subject matter of Example 41 can optionally include: a multiplier, configured to multiply the SINR values with the correction factor to provide the SINR values corrected by the correction factor.

In Example 43, the subject matter of any one of Examples 41-42 can optionally include that the metric computation block comprises: a conversion block, configured to convert the SINR values corrected by the correction factor into frequency dependent mutual information metrics; and an averaging block, configured to wideband and/or sub-band average the frequency dependent mutual information metrics.

In addition, while a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it is understood that aspects of the disclosure may be implemented in discrete circuits, partially integrated circuits or fully integrated circuits or programming means. Also, the terms "exemplary", "for example" and "e.g." are merely meant as an example, rather than the best or optimal.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

**Claims**

1. A method for providing channel quality indicator, CQI, reports, the method comprising:

   providing signal to interference and noise ratio, SINR, values based on bandwidth-specific channel and noise data of a radio channel (201);
   determining a correction factor for the SINR values based on a difference of a noise power value and a time-filtered version of the noise power value (202); and
   providing the CQI reports based on processing the SINR values corrected by the correction factor according to a predetermined CQI metric (203).

2. The method of claim 1,
   wherein the noise power value indicates a wideband noise and interference of the radio channel.

3. The method of claim 1 or 2, comprising:
   time-filtering the noise power value per sub-frame to obtain the time-filtered version of the noise power value.

4. The method of one of the preceding claims, comprising:
   computing the difference of the noise power value and the time-filtered version of the noise power value only per multiple sub-frames.

5. The method of one of the preceding claims, comprising:
   determining the correction factor and providing the CQI reports only per multiple sub-frames.

6. The method of claim 4 or 5,
   wherein the multiple sub-frames correspond to a measurement sub-frame set scheduled by a network designated to receive the CQI reports.

7. The method of one of the preceding claims,
   wherein the SINR values are only corrected by the correction factor if the difference of the noise power value and the time-filtered version of the noise power value is equal to or greater than a first noise power threshold.

8. The method of one of the preceding claims,
   wherein the SINR values are only corrected by the correction factor if the difference of the noise power value and the time-filtered version of the noise power value is equal to or less than a second noise power threshold.

9. The method of one of the preceding claims,
   wherein the correction factor is applied as a multiplicative factor to the SINR values.

10. The method of one of the preceding claims, comprising:
    applying frequency-dependent post-equalization to the bandwidth-specific channel and noise data to provide the SINR values.

11. The method of one of the preceding claims, comprising:
    converting the SINR values corrected by the correction factor into frequency dependent mutual information metrics.

12. The method of claim 11, comprising:
    wideband and/or sub-band averaging the frequency dependent mutual information metrics.

13. A computer readable non-transitory medium on which computer instructions are stored which when executed by a computer causes the computer to perform the method of any one of claims 1 to 12.

14. A channel quality indicator, CQI, processor, comprising:

    a post-equalization block (301), configured to provide signal to interference and noise ratio, SINR, values based on bandwidth-specific channel and noise data of a radio channel;
    a correction block (302), configured to determine a correction factor for the SINR values based on a difference of a noise power value and a time-filtered version of the noise power value; and

a metric computation block (303), configured to provide CQI reports based on processing the SINR values corrected by the correction factor according to a predetermined CQI metric.

15. The CQI processor of claim 14, comprising:
a multiplier, configured to multiply the SINR values with the correction factor to provide the SINR values corrected by the correction factor.

**Patentansprüche**

1. Verfahren zum Bereitstellen von Kanalqualitätsanzeigeberichten (Channel Quality Indicator reports, CQI-Berichte, wobei das Verfahren umfasst:

   Bereitstellen von Signal-zu-Interferenz-und-Rausch-Verhältniswerten (Signal to Interference and Noise Ratio values, SINR-Werte) aufgrund von bandbreitenspezifischen Kanal- und Rauschdaten eines Funkkanals (201); Ermitteln eines Korrekturfaktors für die SINR-Werte aufgrund einer Differenz eines Rauschleistungswerts und einer zeitlich gefilterten Version des Rauschleistungswerts (202); und Bereitstellen der CQI-Berichte aufgrund eines Verarbeitens der SINR-Werte, die durch den Korrekturfaktor gemäß einer vorbestimmten CQI-Kennzahl (203) korrigiert werden.

2. Verfahren nach Anspruch 1, wobei der Rauschleistungswert ein Breitbandrauschen und eine Breitbandinterferenz des Funkkanals anzeigt.

3. Verfahren nach Anspruch 1 oder 2, umfassend:
zeitliches Filtern des Rauschleistungswerts pro Teilframe, um die zeitlich gefilterte Version des Rauschleistungswerts zu erhalten.

4. Verfahren nach einem der vorhergehenden Ansprüche, umfassend:
Berechnen der Differenz des Rauschleistungswerts und der zeitlich gefilterten Version des Rauschleistungswerts nur für mehrere Teilframes.

5. Verfahren nach einem der vorhergehenden Ansprüche, umfassend:
Ermitteln des Korrekturfaktors und Bereitstellen der CQI-Berichte nur für mehrere Teilframes.

6. Verfahren nach Anspruch 4 oder 5, wobei die mehreren Teilframes einer Mess-Teilframegruppe entsprechen, die durch ein Netzwerk geplant wird, das dafür vorgesehen ist, die CQI-Berichte zu empfangen.

7. Verfahren nach einem der vorhergehenden Ansprüche, wobei die SINR-Werte nur durch den Korrekturfaktor korrigiert werden, wenn die Differenz zwischen dem Rauschleistungswert und der zeitlich gefilterten Version des Rauschleistungswerts gleich oder größer als ein erster Rauschleistungsschwellenwert ist.

8. Verfahren nach einem der vorhergehenden Ansprüche, wobei die SINR-Werte nur durch den Korrekturfaktor korrigiert werden, wenn die Differenz zwischen dem Rauschleistungswert und der zeitlich gefilterten Version des Rauschleistungswerts gleich oder kleiner als ein zweiter Rauschleistungsschwellenwert ist.

9. Verfahren nach einem der vorhergehenden Ansprüche, wobei der Korrekturfaktor als ein Multiplikationsfaktor auf die SINR-Werte angewandt wird.

10. Verfahren nach einem der vorhergehenden Ansprüche, umfassend:
Anwenden einer frequenzabhängigen Postentzerrung auf die bandbreitenspezifischen Kanal- und Rauschdaten, um die SINR-Werte bereitzustellen.

11. Verfahren nach einem der vorhergehenden Ansprüche, umfassend:
Umwandeln der durch den Korrekturfaktor korrigierten SINR-Werte in frequenzabhängige gegenseitige Informationskennzahlen.

12. Verfahren nach Anspruch 11, umfassend:
Breitband- und/oder Teilbandmittel der frequenzabhängigen gegenseitigen Informationskennzahlen.

**13.** Computerlesbares nichtflüchtiges Medium, in dem Computerbefehle gespeichert sind, die, wenn sie von einem Computer ausgeführt werden, den Computer veranlassen, das Verfahren nach einem der Ansprüche 1 bis 12 auszuführen.

**14.** Prozessor für eine Kanalqualitätsanzeige (Channel Quality Indicator, CQI), umfassend:

einen Postentzerrungsblock (301), der konfiguriert ist zum Bereitstellen von Signal-zu-Interferenz-und-Rausch-Verhältniswerten (Signal to Interference and Noise Ratio values, SINR-Werte) aufgrund von bandbreitenspezifischen Kanal- und Rauschdaten eines Funkkanals;
einen Korrekturblock (302), der konfiguriert ist zum Ermitteln eines Korrekturfaktors für die SINR-Werte aufgrund einer Differenz eines Rauschleistungswerts und einer zeitlich gefilterten Version des Rauschleistungswerts; und
einen Kennzahlenberechnungsblock (303), der konfiguriert ist zum Bereitstellen von CQI-Berichten aufgrund eines Verarbeitens der SINR-Werte, die durch den Korrekturfaktor gemäß einer vorbestimmten CQI-Kennzahl korrigiert werden.

**15.** CQI-Prozessor nach Anspruch 14, umfassend:
einen Multiplizierer, der konfiguriert ist zum Multiplizieren der SINR-Werte mit dem Korrekturfaktor, um die durch den Korrekturfaktor korrigierten SINR-Werte bereitzustellen.

**Revendications**

**1.** Procédé pour fournir des rapports d'indicateur de qualité de canal, CQI, le procédé comprenant :

la fourniture de valeurs de rapport signal sur brouillage et bruit, SINR, sur la base des données de canal de largeur de bande spécifique et de bruit d'un canal radio (201) ;
la détermination d'un facteur de correction pour les valeurs de SINR sur la base d'une différence entre une valeur de puissance de bruit et une version filtrée dans le temps de la valeur de puissance de bruit (202) ; et
la fourniture des rapports CQI sur la base du traitement des valeurs de SINR corrigées par le facteur de correction en fonction d'une métrique prédéterminée de CQI (203).

**2.** Procédé selon la revendication 1, la valeur de puissance de bruit indiquant un bruit à large bande et un brouillage du canal radio.

**3.** Procédé selon la revendication 1 ou 2, comprenant :
le filtrage dans le temps de la valeur de puissance de bruit par sous-trame pour obtenir la version filtrée dans le temps de la valeur de puissance de bruit.

**4.** Procédé selon l'une des revendications précédentes, comprenant :
le calcul de la différence entre la valeur de puissance de bruit et la version filtrée dans le temps de la valeur de puissance de bruit seulement par sous-trames multiples.

**5.** Procédé selon l'une des revendications précédentes, comprenant :
la détermination du facteur de correction et la fourniture des rapports CQI seulement par sous-trames multiples.

**6.** Procédé selon la revendication 4 ou 5,
les sous-trames multiples correspondant à un ensemble de sous-trames de mesure programmées par un réseau désigné pour recevoir les rapports CQI.

**7.** Procédé selon l'une des revendications précédentes,
les valeurs de SINR n'étant corrigées par le facteur de correction que si la différence entre la valeur de puissance de bruit et la version filtrée dans le temps de la valeur de puissance de bruit est égale ou supérieure à un premier seuil de puissance de bruit.

**8.** Procédé selon l'une des revendications précédentes,
les valeurs de SINR n'étant corrigées par le facteur de correction que si la différence entre la valeur de puissance de bruit et la version filtrée dans le temps de la valeur de puissance de bruit est égale ou inférieure à un second seuil de puissance de bruit.

**9.** Procédé selon l'une des revendications précédentes,
le facteur de correction étant appliqué en tant que facteur multiplicatif aux valeurs de SINR.

**10.** Procédé selon l'une des revendications précédentes, comprenant :
l'application d'une post-égalisation en fonction de la fréquence aux données de canal de largeur de bande spécifique et de bruit pour fournir les valeurs de SINR.

**11.** Procédé selon l'une des revendications précédentes, comprenant :
la conversion des valeurs de SINR corrigées par le facteur de correction en métriques d'information mutuelle dépendantes de la fréquence.

**12.** Procédé selon la revendication 11, comprenant :
le moyennage à large bande et/ou à sous-bande, des métriques d'information mutuelle dépendantes de la fréquence.

**13.** Support non transitoire lisible par ordinateur sur lequel sont stockées des instructions informatiques qui, lorsqu'elles sont exécutées par un ordinateur, amènent l'ordinateur à réaliser le procédé selon l'une quelconque des revendications 1 à 12.

**14.** Processeur d'indicateur de qualité de canal, CQI, comprenant :

un bloc de post-égalisation (301), configuré pour fournir des valeurs de rapport signal sur brouillage et bruit, SINR, sur la base des données de canal de largeur de bande spécifique et de bruit d'un canal radio ;
un bloc de correction (302), configuré pour déterminer un facteur de correction pour les valeurs de SINR sur la base d'une différence entre une valeur de puissance de bruit et une version filtrée dans le temps de la valeur de puissance de bruit ; et
un bloc de calcul de métriques (303), configuré pour fournir des rapports de CQI sur la base du traitement des valeurs de SINR corrigées par le facteur de correction en fonction d'une métrique prédéterminée de CQI.

**15.** Processeur du CQI selon la revendication 14, comprenant :
un multiplicateur, configuré pour multiplier les valeurs de SINR par le facteur de correction pour obtenir les valeurs de SINR corrigées par le facteur de correction.

Fig. 1

200

providing SINR values based on bandwidth-specific channel and noise data of radio channel — 201

determining a correction factor for SINR values based on difference of noise power value and filtered version thereof — 202

providing CQI reports based on processing the SINR values corrected by the correction factor according to a predetermined CQI metric — 203

Fig. 2

300

Fig. 3

400

405 correction factor

401 FCM

402 FNM

CSI processor

403

CQI reports

404

Fig. 4

Fig. 5

Fig. 6

700

CQI

702          702                                    703          705
                                                                 Use
20dB                                                    12       deltaNoise to
706                                                              bring down
                                                    deltaNoise   CQI from 12
14dB                                                             to 10 in SF n
                                                        10
701

                                    n                        t

                        Report in SF n
                                            704

Fig. 7

Fig. 8

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060093024 A1
- US 20120163208 A1

- US 20040093178 A1